# EUROPÄISCHE PATENTANMELDUNG

(11) **EP 2 682 662 A2**
(43) Veröffentlichungstag der Anmeldung: **08.01.2014**
(21) Anmeldenummer: 13173520.1
(22) Anmeldetag: 25.06.2013
(51) Int. Cl.: F16L 59/02

(54) **Verfahren zur Montage einer Brandschutzeinrichtung oder einer Isolation mit Brandschutzeigenschaften sowie Brandschutzbaugruppe**

(30) Priorität: 03.07.2012 DE 102012211559
(71) Anmelder: HILTI Aktiengesellschaft, 9494 Schaan (LI)
(72) Erfinder: Förg, Christian, 86862 Dillishausen (DE)

(57) **Zusammenfassung**

Bei einem Verfahren zur Montage einer Brandschutzeinrichtung (14) oder einer Isolation mit Brandschutzwirkung an einer Leitung (12) oder einem Rohr, wobei die Brandschutzeinrichtung (14) oder Isolation mit Brandschutzwirkung in Umfangsrichtung (U) vollständig um die Leitung (12) oder das Rohr gelegt, insbesondere gewickelt wird, ist vorgesehen, dass ein flexibles Klebeband (16) mit in Längsrichtung (L) des Klebebandes (16) verlaufenden hitzebeständigen Fasern, insbesondere mit Glasfasern (18), in Umfangsrichtung (U) der Leitung (12) oder des Rohres vollständig um die Brandschutzeinrichtung (14) oder die Isolation mit Brandschutzwirkung gewickelt wird.

## Beschreibung

Die Erfindung betrifft ein Verfahren zur Montage einer Brandschutzeinrichtung oder einer Isolation, die gegebenenfalls mit Brandschutzfunktion ausgestattet ist, an einer Leitung oder einem Rohr, wobei die Brandschutzeinrichtung oder die Isolation, die gegebenenfalls mit Brandschutzfunktion ausgestattet ist, in Umfangsrichtung vollständig um die Leitung oder das Rohr gelegt, insbesondere gewickelt wird. Die Erfindung betrifft des Weiteren eine Brandschutzbaugruppe zur Umwicklung einer Leitung oder eines Rohrs.

Zum Schutz vor Hitze, beispielsweise im Brandfall, werden Rohre oder Leitungen mit Brandschutzeinrichtungen oder Isolationen, die gegebenenfalls mit Brandschutzfunktion ausgestattet sind, umwickelt. Zusätzlich zum Schutz des Rohres oder der Leitung können diese durch eine geeignete Konstruktion und Materialwahl auch eine Ausbreitung von Feuer oder Rauch verhindern. Dazu weisen solche Brandschutzeinrichtungen beispielsweise ein intumeszierendes Material auf, das sich unter Hitzeeinwirkung ausdehnt und dadurch Wand- oder Deckendurchbrüche abdichten kann.

Eine Brandschutzeinrichtung bedeutet beispielsweise eine im Brandfalle aufschäumende oder kühlende Bandage, enthaltend ein intumeszierendes, aschebildendes und/oder ablatives Material, zur Verhinderung der Brandausbreitung. Das intumeszierende Material bildet im Brandfall eine mikroporöse und wärmedämmende Schaumschicht, die durch ihre geringe Wärmeleitfähigkeit und den Sauerstoffabschluss die Leitungen und Rohre vor Brandeinwirkungen schützt. Das aschebildende Material bildet im Brandfall eine stabile Aschekruste, ohne jedoch aufzuschäumen. Das ablative Material zersetzt sich im Allgemeinen unter Wasserabspaltung, wodurch die Leitung bzw. das Rohr gekühlt wird. Bei der Bandage kann es sich um eine Vollbandage oder eine Teilbandage handeln. Durch die Vollbandage werden Rohre oder Leitungen vollständig, d.h. über ihre gesamte Länge mit der Bandage umwickelt, wohingegen bei der Teilbandage nur ein Teil der Rohre oder Leitungen von der Bandage umwickelt wird, insbesondere im Bereich eines Bauteildurchbruchs bzw. -öffnung. In Sinne der Erfindung umfasst der Begriff Bandage sowohl eine Voll- als auch eine Teilbandage.

Eine Isolierung mit Brandschutzfunktion ist beispielsweise eine herkömmliche Leitungs-oder Rohrisolierung, aus etwa Mineralwolle oder dergleichen, die mit einem Brandschutzmaterial (intumeszierendes, aschebildendes und/oder ablatives Material) beispielsweise beschichtet ist oder die aufgrund ihrer Beschaffenheit, d.h. aus dem Material aus dem sie besteht, brandhemmend ausgestattet ist (integraler Brandschutz). In Sinne der Erfindung wird dabei von einer Isolierung, die gegebenenfalls mit Brandschutzfunktion ausgestattet ist, gesprochen, so dass sowohl beschichtete Isolierungen als auch Isolierungen mit integralem Brandschutz umfasst sein sollen.

Diese Brandschutzeinrichtungen oder Isolationen werden üblicherweise um das Rohr oder die Leitung gewickelt und anschließend an diesen fixiert. Das ist insbesondere dann erforderlich, wenn die Brandschutzeinrichtung oder die Isolation nicht in einen Ringspalt zwischen der Leitung bzw. dem Rohr und der Bauteilöffnung eingeschoben oder nicht genügend tief eingeschoben werden kann. Die Fixierung kann beispielsweise durch ein Trägerband aus Metall erfolgen, das mit der Brandschutzeinrichtung oder der Isolation verbunden ist und diese in montiertem Zustand in Umfangsrichtung umschließt. Aus dem Stand der Technik sind des Weiteren separate Stahlbänder oder Blechummantelungen bekannt, die zusätzlich eine Befestigung des Rohres oder der Isolation an einer Wand oder Decke ermöglichen.

Nachteilig an solchen Trägerbändern oder Stahlbändern ist die aufwendige Montage. Zudem weisen insbesondere Stahlbänder häufig sehr scharfe Kanten auf, die zu Verletzungen führen können. Einfache Befestigungsmöglichkeiten, wie beispielsweise Klebebänder, sind üblicherweise nicht hitzebeständig.

Aufgabe der Erfindung ist es, ein Verfahren zur Montage einer solchen Brandschutzeinrichtung oder Isolation bereitzustellen, das eine einfache Fixierung der Brandschutzeinrichtung oder Isolation ermöglicht und auch im Brandfall eine zuverlässige Fixierung sicherstellt. Aufgabe der Erfindung ist es ferner, eine einfach zu montierende Brandschutzbaugruppe zur Umwicklung einer Leitung oder eines Rohrs bereitzustellen.

Erfindungsgemäß ist zur Lösung der Aufgabe bei einem Verfahren zur Montage einer Brandschutzeinrichtung oder einer Isolation mit Brandschutzfunktion an einer Leitung oder einem Rohr, wobei die Brandschutzeinrichtung oder Isolation mit Brandschutzwirkung in Umfangsrichtung vollständig um die Leitung oder das Rohr gelegt, insbesondere gewickelt wird, vorgesehen, dass ein flexibles Klebeband mit in Längsrichtung des Klebebandes verlaufenden hitzebeständigen Fasern, insbesondere mit Glasfasern, in Umfangsrichtung der Leitung oder des Rohres vollständig um die Brandschutzeinrichtung oder die Isolation mit Brandschutzfunktion gewickelt wird. Flexibel bedeutet dabei, dass das Band derart biegsam bzw. elastisch ist, dass es ohne Schwierigkeiten um die verschalte Leitung bzw. das Rohr gewickelt werden kann. Hitzebeständig bedeutet, dass die Fasern bis zu Temperaturen oberhalb von 1000°C ausreichend widerstandsfähig bleiben und sich deren Eigenschaften nicht so stark ändern, dass das Material nicht mehr seinen Anforderungen entspricht, d.h. deren Haltefunktion verlieren.

Üblicherweise werden Klebebänder für eine solche Fixierung nicht verwendet, da die verwendeten Materialien des Klebebands sowie der Klebeschicht bereits bei sehr geringen Temperaturen aufweichen oder sich zersetzen wodurch keine Haltefunktion für die Brandschutzeinrichtung oder die Isolation vorhanden ist. Überraschenderweise hat sich herausgestellt, dass Klebebänder mit hitzebeständigen Fasern, insbesondere Glasfasern, eine sehr hohe Temperaturbeständigkeit aufweisen, obwohl die Klebeschicht sowie die Klebefolie eines solchen Klebebandes eine sehr geringe Temperaturbeständigkeit aufweisen. Die Fasern eines solchen Klebebandes beginnen zwar ebenfalls ab einer bestimmten Temperatur teilweise zu schmelzen, bilden aber ein stabiles, angeschmolzenes keramikartiges Material, das auch bei hohen Temperaturen eine Fixierung der Brandschutzeinrichtung oder der Isolation mit Brandschutzeigenschaften sicherstellt.

Diese Funktion ist auch gegeben, wenn die Trägerfolie beziehungsweise die Klebeschicht des Klebebands bei hohen Temperaturen schmilzt beziehungsweise sich zersetzt. Durch das keramikartige Material ist auch nach dem Abkühlen ein sicheres Fixieren der Brandschutzeinrichtung oder der Isolation an der Leitung oder dem Rohr gewährleistet.

In Versuchen hat sich gezeigt, dass die Stabilität der angeschmolzenen Fasern ausreichend hoch ist, um die bei einem intumeszierenden Material aufgrund der Ausdehnung auftretenden Spannungen aufzunehmen und somit auch bei einem solchen Material als Fixierung verwendet werden zu können.

Vorzugsweise wird das Klebeband mit mindestens zwei vollständigen Umwicklungen um die Brandschutzeinrichtung oder die Isolation mit Brandschutzeigenschaften gewickelt, sodass sich das Klebeband über den gesamten Umfang überlappt. Dies stellt einen besonders stabilen Verbund sicher.

Die Umwicklungen des Klebebands überlappen sich vorzugsweise zumindest abschnittsweise, sodass die Fasern der einzelnen Umwicklungen teilweise übereinander liegen. Dadurch können sich diese beim Schmelzen beziehungsweise Zersetzen des Klebebandes miteinander verbinden und somit einen stabilen Ring um die Brandschutzeinrichtung oder die Isolation bilden.

Dazu verlaufen die Fasern der einzelnen Wicklungen beispielsweise zumindest abschnittsweise übereinander oder parallel zueinander, sodass sich diese beim Schmelzen des Klebebands beziehungsweise des Klebemittels über einen größeren Bereich miteinander verbinden können.

Es ist aber auch denkbar, dass sich die Fasern der einzelnen Umwicklungen abschnittsweise überkreuzen und somit lediglich an diesen Kreuzungspunkten miteinander verschmelzen, wodurch nach dem Verschmelzen eine stabile netzartige Struktur um die Brandschutzeinrichtung oder die Isolation gebildet ist. Erfindungsgemäß ist des Weiteren eine Brandschutzbaugruppe zur Umwicklung einer Leitung oder eines Rohrs vorgesehen, mit einer Brandschutzeinrichtung oder einer Isolation mit Brandschutzeigenschaften und einem Klebeband, das in Längsrichtung verlaufende hitzebeständige Fasern, insbesondere Glasfasern, aufweist. Aufgrund der Fasern, die im Brandfall anschmelzen und ein keramikartiges Material bilden, ist die Brandschutzeinrichtung auch im Brandfall sicher an der Leitung oder dem Rohr gehalten.

Die Brandschutzeinrichtung oder Isolation kann zumindest teilweise aus einem intumeszierenden Material hergestellt sein, das sich bei Hitzeeinwirkung ausdehnt. In Versuchen hat sich herausgestellt, dass das angeschmolzene keramikartige Material eine ausreichend hohe Festigkeit aufweist, um den Belastungen, insbesondere den in Umfangsrichtung verlaufenden Zugspannungen, die durch das Ausdehnen des intumeszierenden Materials entstehen, standzuhalten.

Das Klebeband kann beispielsweise eine Trägerfolie, insbesondere aus PVC, sowie eine Klebstoffschicht aufweisen, die beispielsweise aus Acrylat oder "Hotmelt" besteht. Die Fasern sind vorzugsweise in die Klebstoffschicht eingebettet.

In einer bevorzugten Ausführungsform wird das Klebeband mit einem erfindungsgemäßen Verfahren um die Brandschutzeinrichtung oder die Isolation gewickelt.

Weitere Vorteile und Merkmale ergeben sich aus der nachfolgenden Beschreibung in Verbindung mit den beigefügten Zeichnungen. In diesen zeigen:
- Figur 1:: eine erfindungsgemäße Brandschutzbaugruppe,
- Figur2:: eine Draufsicht auf das Klebeband der Brandschutzbaugruppe aus Figur 1,
- Figur 3:: eine Schnittansicht durch das Klebeband aus Figur 2,
- Figur 4:: eine Draufsicht auf das Klebeband aus Figur 2 in montiertem Zustand an der Brandschutzbaugruppe aus Figur 1,und
- Figur 5:: eine Darstellung der Temperaturbeständigkeit der Materialien des Klebebands aus Figur 2 bei einem normierten Brandtest.

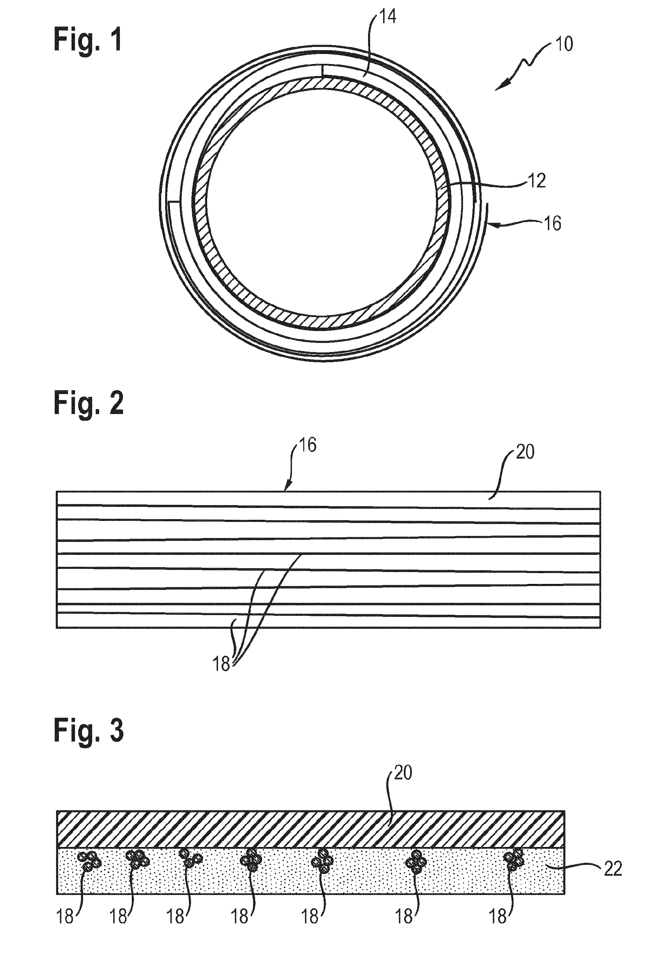

In Figur 1 ist eine Brandschutzbaugruppe 10 zum Schutz einer Leitung 12 gezeigt. Die Leitung 12 kann beispielsweise ein Kabel oder ein Rohr sein, das durch die Brandschutzbaugruppe 10 vor Hitzeeinwirkung, beispielsweise vor einem Feuer, geschützt wird. Abhängig von der Position der Brandschutzbaugruppe 10 kann diese auch eine Ausbreitung des Feuers oder von Rauch verhindern, indem die Brandschutzbaugruppe 10 in einem Wand- oder Deckendurchbruch angeordnet ist.

Die Brandschutzbaugruppe 10 weist eine Brandschutzeinrichtung 14 auf, die aus einem flexiblen isolierenden und/oder intumeszierenden Material, das sich unter Hitzeeinwirkung ausdehnt, hergestellt ist. Die Brandschutzeinrichtung 14 ist in Umfangsrichtung U vollständig um die Leitung 12 gewickelt, sodass ein zuverlässiger Hitzeschutz der Leitung 12 erfolgt.

Zur Fixierung der Brandschutzeinrichtung 14 ist ein auch in den Figuren 2 und 3 dargestelltes Klebeband 16 mit Glasfasern 18 vorgesehen. Statt Glasfasern 18 können auch andere, hitzebeständige Fasern verwendet werden.

Wie in Figur 3 zu sehen ist, hat das Klebeband 16 eine Trägerfolie 20, die beispielsweise aus PVC oder einem anderen flexiblen Kunststoff besteht. Auf der Unterseite der Trägerfolie 20 ist eine Klebstoffschicht 22 vorgesehen, die beispielsweise aus Acrylat, "Hotmelt" oder einem anderen handelsüblichen Klebemittel besteht. In die Klebstoffschicht 22 sind einzelne, in Längsrichtung verlaufende Glasfasern 18 eingebettet.

Wie in Figur 1 zu sehen ist, ist das Klebeband 16 mit zumindest zwei vollständigen Umwicklungen um die Brandschutzeinrichtung 14 und somit die Leitung 12 herumgewickelt, wobei die Wicklungen aufeinander liegen, sich also zumindest teilweise überlappen, wodurch die Brandschutzeinrichtung 14 sicher an der Leitung 12 fixiert ist.

Die Glasfasern 18 des Klebebands 16 verlaufen, da diese in Längsrichtung L im Klebeband 16 verlaufen, ebenfalls in Umfangsrichtung U um die Brandschutzeinrichtung 14.

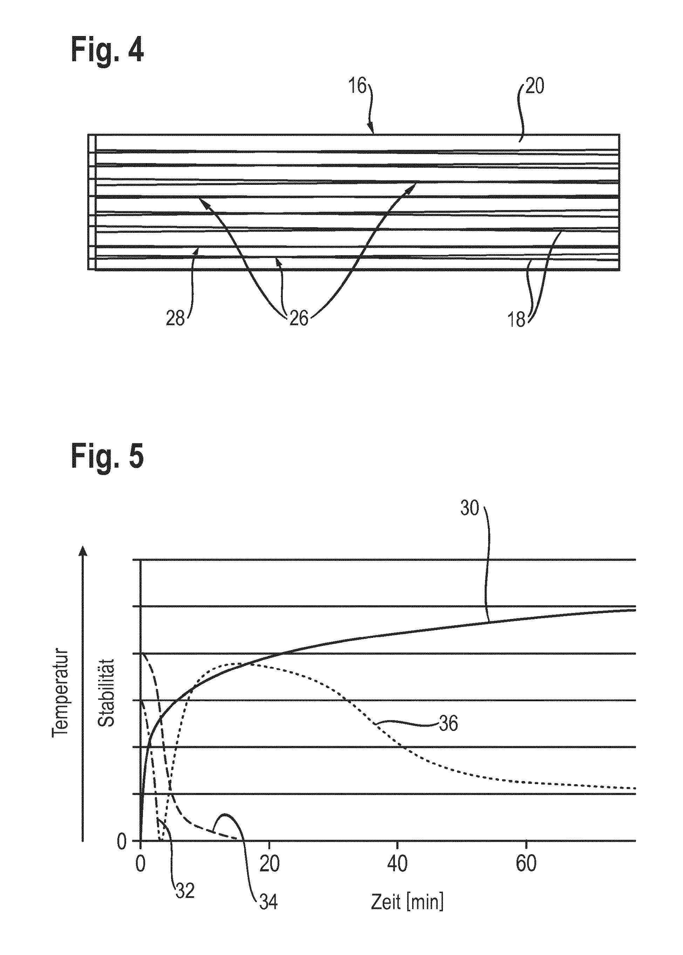

Wie in Figur 4 zu sehen ist, überlappen sich die einzelnen Wicklungen des Klebebands 16, so dass die Glasfasern 18 der einzelnen Wicklungen abschnittsweise parallel zueinander oder übereinander verlaufen (Bezugszeichen 26). Da die Glasfasern 18 nicht über die gesamte Länge des Klebebandes 16 parallel zueinander verlaufen, überkreuzen sich die Glasfasern der einzelnen Wicklungen aber auch abschnittsweise (Bezugszeichen 28).

In Figur 5 ist das Verhalten der einzelnen Komponenten des Klebebands 16 bei einem standardisierten Brandtest dargestellt. Die Kurve 30 bezeichnet den zeitlichen Temperaturverlauf bei diesem Brandtest. Das Verhalten der Klebstoffschicht 22 ist durch die Kurve 32 dargestellt, der Trägerfolie durch die Kurve 34 sowie das Verhalten der Fasern durch der Kurve 36.

Die Klebstoffschicht 22 erweicht schon bei sehr geringen Temperaturen von unter 100° C und legt die Glasfasern 18 frei. Parallel dazu erfolgt eine Zersetzung beziehungsweise Schmelzen der PVC-Folie, die dadurch adhäsive Eigenschaften entwickelt und die Glasfasern 18 dadurch in ihrer Position hält. Zeitversetzt beginnt eine Schmelze der Glasfasern 18 (Kurve 36).

Diese drei Kurven stellen allerdings lediglich das Verhalten der einzelnen Werkstoffe dar. Sind diese in dem mehrlagigen Aufbau in einem Klebeband 16 kombiniert, überlagern sich die einzelnen Effekte, sodass innerhalb der ersten 20 Minuten während des Brandtests jederzeit ein Material oder eine Schicht in einem klebrigen adhäsiven Zustand befindet.

Nach dem Aufschmelzen sind die Glasfasern 18 zusammengeklebt. Durch verschiedene Prozesse wird dabei die Schmelzphase der Glasfasern 18 verzögert beziehungsweise die Schmelztemperatur der Glasfasern 18 erhöht, sodass diese über einen längeren Zeitraum einen stabilen Verbund bilden. Bei der weiteren Temperaturerhöhung, verlieren die Glasfasern ihre mechanischen Eigenschaften, jedoch bleibt immer eine gewisse Reststabilität vorhanden.

Die Glasfasern bilden also einen keramischen, stabilen Verbund, der auch bei hohen Temperaturen, bei denen normale Klebebänder schmelzen und ihre Haltewirkung verlieren, eine sichere Fixierung der Brandschutzeinrichtung 14 an der Leitung 12 gewährleistet. Diese Fixierung ist insbesondere dadurch sichergestellt, dass die Glasfasern 18 einen Ring bilden, der sich in Umfangsrichtung U vollständig um die Brandschutzeinrichtung 14 erstreckt.

In Versuchen hat sich herausgestellt, dass die Glasfasern nach einem Brandtest eine ausreichend hohe Stabilität haben, um auch bei intumeszierenden Materialien, die sich ausdehnen und somit eine zusätzliche Spannung auf das Klebeband beziehungsweise die Glasfasern 18 aufbringen, eine zuverlässige Fixierung der Brandschutzeinrichtung 14 von der Leitung 12 ermöglichen.

Statt des hier verwendeten Klebebands 16 mit ausschließlich in Längsrichtung L verlaufenden Glasfasern 18 können auch andere Klebebänder mit hitzebeständigen Fasern verwendet werden. Insbesondere können beispielsweise auch sogenannte Gitterklebebänder verwendet werden, bei denen die Glasfasern 18 teilweise quer zur Längsrichtung angeordnet sind.

## Patentansprüche

1. Verfahren zur Montage einer Brandschutzeinrichtung (14) oder einer Isolation, die gegebenenfalls mit Brandschutzwirkung ausgestattet ist, an einer Leitung (12) oder einem Rohr, wobei die Brandschutzeinrichtung (14) oder Isolation mit Brandschutzwirkung in Umfangsrichtung (U) vollständig um die Leitung (12) oder das Rohr gelegt, **dadurch gekennzeichnet, dass** ein flexibles Klebeband (16) mit in Längsrichtung (L) des Klebebandes (16) verlaufenden hitzebeständigen Fasern (18) in Umfangsrichtung (U) der Leitung (12) oder des Rohrs vollständig um die Brandschutzeinrichtung (14) oder die Isolation, die gegebenenfalls mit Brandschutzwirkung ausgestattet ist, gewickelt wird.

2. Verfahren nach Anspruch 1, **dadurch gekennzeichnet, dass** das Klebeband (16) mit mindestens zwei vollständigen Umwicklungen um die Brandschutzeinrichtung (14) oder die Isolation, die gegebenenfalls mit Brandschutzwirkung ausgestattet ist, gewickelt wird.

3. Verfahren nach Anspruch 2, **dadurch gekennzeichnet, dass** sich die Umwicklungen des Klebebands (16) zumindest abschnittsweise überlappen.

4. Verfahren nach Anspruch 1 oder 2, **dadurch gekennzeichnet, dass** die Fasern der einzelnen Umwicklungen zumindest abschnittsweise übereinander oder parallel zueinander verlaufen.

5. Verfahren nach einem der vorhergehenden Ansprüche, **dadurch gekennzeichnet, dass** sich die Fasern der einzelnen Umwicklungen abschnittsweise überkreuzen.

6. Brandschutzbaugruppe (10) zur Umwicklung einer Leitung (12) oder eines Rohrs, mit einer Brandschutzeinrichtung (14) oder einer Isolation, die gegebenenfalls mit Brandschutzwirkung ausgestattet ist, und einem Klebeband (16), das in Längsrichtung (L) verlaufende hitzebeständige Fasern, insbesondere Glasfasern (18), aufweist.

7. Brandschutzbaugruppe nach Anspruch 6, **dadurch gekennzeichnet, dass** die Brandschutzeinrichtung (14) oder Isolation, die gegebenenfalls mit Brandschutzwirkung ausgestattet ist, zumindest teilweise aus einem aschebildenden, intumeszierenden und/oder ablativen Material hergestellt ist.

8. Brandschutzbaugruppe nach Anspruch 6 oder Anspruch 7, **dadurch gekennzeichnet, dass** das Klebeband (16) eine Trägerfolie (20), insbesondere aus PVC, sowie eine Klebstoffschicht (22) aufweist.

9. Brandschutzbaugruppe nach einem der Ansprüche 6 bis 8, **dadurch gekennzeichnet, dass** die Brandschutzbaugruppe (10) mit einem Verfahren nach einem der Ansprüche 1 bis 5 hergestellt ist.
